# EUROPÄISCHE PATENTSCHRIFT

(11) **EP 1 088 725 B1**
(45) Veröffentlichungstag und Bekanntmachung des Hinweises auf die Patenterteilung: **14.07.2004**
(21) Anmeldenummer: 00120674.7
(22) Anmeldetag: 21.09.2000
(51) Int. Cl.: B60T 8/00, G01P 3/44, F16D 65/12

(54) **Bremsenkörper**
Brake body
Corps de frein

(30) Priorität: 21.09.1999 DE 19945137
(43) Veröffentlichungstag der Anmeldung: 04.04.2001
(73) Patentinhaber: WABCO Perrot Bremsen GmbH, 68229 Mannheim (DE)
(72) Erfinder: Antony, Paul, 67550 Worms (DE); Wübbeling, Martin, 68161 Mannheim (DE)
(74) Vertreter: Patentanwälte Leinweber & Zimmermann

(56) Entgegenhaltungen:
- DE-A- 4 412 307
- DE-A- 19 539 615
- DE-A- 19 637 482
- DE-C- 4 445 236

## Beschreibung

Die Erfindung betrifft einen Bremsenkörper für eine Bremse eines Rades, wobei
der Bremsenkörper sich in eingebautem Zustand mit dem Rade dreht und beim Bremsen Reibkräfte aufnimmt und
einstückig mit dem Bremsenkörper mindestens ein erstes Element einer Erfassungsvorrichtung zum Erfassen der Drehzahl und/oder der Drehrichtung des Rades ausgebildet ist, das mit mindestens einem zweiten, nicht mit dem Rade drehenden Element der Erfassungsvorrichtung zusammenwirkt.

Ein Bremsenkörper der eingangs genannten Art ist bekannt, beispielsweise aus der DE 43 21 930 C2. Er dient beispielsweise dem Einsatz in einem Antiblockier-System (ABS). Dabei sind die ersten Elemente von Zähnen auf einem Polrad gebildet, das als Impulsgeber dient. Das in Form eines optischen Sensors ausgeführte zweite Element liegt dabei dem Polrad nahe axial gegenüber, um aus den Polrad-Impulsen eine Radialdrehzahl zu ermitteln und an das ABS weiterzuleiten. Die Oberfläche des Polrades ist dazu mit einer Verzahnung versehen.

Zur Gewährleistung einer hohen Erfassungsgenauigkeit muß der Sensor möglichst nahe dem Polrad angeordnet sein. Da sich der Bremsenkörper und damit das Polrad beim Bremsen wegen der auftretenden Reibkräfte stark erhitzt, muß der dem Polrad sehr nahe angeordnete Sensor hitzebeständig sein, um nicht Schaden zu nehmen. Dadurch wird die Herstellung verteuert.

Ferner bedeutet eine Erwärmung des Polrades, daß Wärmestrahlen auf den Sensor einwirken. Darüber hinaus kann sich das Polrad infolge thermischer Ausdehnung verspannen, weshalb ein entsprechender "Sicherheitsabstand" von dem Sensor einzuhalten ist. Darunter leidet aber die Genauigkeit der Impulserfassung.

Aus der DE 42 30 012 A1 und der EP 0 666 478 B1 sind jeweils Bremsen bekannt, bei denen das als Impulsring bzw. als Polring bezeichnete Polrad nicht einstückig mit dem Bremsenkörper ausgeführt ist. Dadurch ist zwar die Übertragung von Wärme von dem Bremsenkörper auf das Polrad gehemmt, die mehrstückige Ausführung führt aber zu mehr Aufwand bei der Montage der Bremse.

Der Erfindung liegt mithin die Aufgabe zugrunde, einen Bremsenkörper der eingangs genannten Art derart weiterzubilden, daß der Wärmefluß zu dem ersten Element der Erfassungsvorrichtung gehemmt ist, jedoch gleichzeitig der Montageaufwand minimiert ist.

Erfindungsgemäß wird die gestellte Aufgabe bei einem Bremsenkörper der eingangs genannten Art dadurch gelöst, daß das mindestens eine erste Element über mindestens eine Speiche mit dem Bremsenkörper verbunden ist, die nicht im Bremskraftfluß von dem Bremsenkörper zu dem Rade liegt.

Dabei liegt der Erfindung die folgende Überlegung zugrunde: Zur Verringerung des Montageaufwandes wird zwar an der einstückigen Ausführung von Bremsenkörper und erstem Element der Erfassungsvorrichtung festgehalten. Es wird jedoch die in der gattungsbildenden DE 43 21 930 C2 beschriebene, in Radialrichtung gesehen vollflächige Verbindung des ersten Elements mit dem Bremsenkörper durch die mindestens eine Speiche ersetzt. Da mithin die Querschnittsfläche des das erste Element mit dem Bremsenkörper verbindenden Materials entsprechend den Zwischenräumen zwischen den Speichen verringert ist, wird auch weniger Wärme von dem Bremsenkörper auf das erste Element übertragen. Daher wird sich das erste Element erheblich weniger erwärmen. Dadurch, daß sich das erste Element in Axialrichtung gesehen sehr nahe dem Bremsenkörper befindet, werden die an diese Einheit gestellten Forderungen dahingehend optimal erfüllt, daß damit eine kurze axiale Baulänge im Einbaubereich des Fahrzeugs sichergestellt ist, und daß ein Schutz des ersten Elements gegen Beschädigung beim z.B. Transport sichergestellt wird.

Durch diese Absenkung der von dem ersten Element ausgehenden Wärmestrahlung ist es möglich, auch den Herstellungsu. Materialaufwand für das zweite Element zu senken. Mit anderen Worten kann das zweite Element trotz des Einsatzes weniger hitzebeständiger Materialien vergleichsweise nahe dem ersten Element angeordnet werden, was wiederum die Genauigkeit der Erfassung verbessert.

Ferner resultiert aus dem Ersatz der vollflächigen Verbindung zwischen dem ersten Element und dem Bremsenkörper durch mindestens eine Speiche eine entsprechende Material- u. Gewichtseinsparung.

Da die Speiche nicht im Bremskraftfluß liegt, muß sie auch keine Kraft übertragen, weshalb sie nahezu beliebig dünn ausgeführt werden kann. Daraus resultiert eine weitere Material- und Gewichtseinsparung.

Das mindestens eine erste Element ist erfindungsgemäß bevorzugt an einem bogenförmigen Träger angeordnet, der über die mindestens eine Speiche mit dem Bremsenkörper verbunden ist. Insbesondere im Falle von mehr als einem ersten Element ergibt sich dadurch eine Stabilität, die sich positiv auf die Erfassungsgenauigkeit auswirkt.

Der Träger kann weiter erfindungsgemäß bevorzugt kreisringförmig sein. Mit anderen Worten wird ein Polrad verwendet.

Der Bremsenkörper kann prinzipiell beliebig ausgestaltet sein. Erfindungsgemäß bevorzugt handelt es sich jedoch um eine Bremsscheibe.

Dabei kann die Bremsscheibe erfindungsgemäß einen Scheibenring und einen Scheibentopf aufweisen.

Nach einer besonders bevorzugten Ausführungsform der Erfindung ist vorgesehen, daß das der Bremsscheibe zugewandte Ende der mindestens einen Speiche im Bereich des Übergangs vom Scheibentopf zum Scheibenring liegt. Dadurch kann der Polrad-Durchmesser klein gehalten werden.

Handelt es sich um eine innenbelüftete Bremsscheibe, ergibt sich noch ein weiterer Vorteil dadurch, daß in diesem Abschnitt auch der Beginn des Lüftungsbereichs mit den Lüftungskanälen liegt, weshalb diese bevorzugte Ausführung der Erfindung die Kühlluft-Zirkulation verbessert.

Bei nicht einstückiger Ausführung von Scheibentopf und Scheibenring ist es erfindungsgemäß bevorzugt, daß das mindestens eine erste Element einstückig mit dem Scheibenring ausgebildet ist. Dadurch wird einer Erwärmung des ersten Elements weiter vorgebeugt.

Bevorzugt sind drei Speichen mit einem gegenseitigen Winkelabstand von 120° vorgesehen. Dadurch lassen sich schmale Speichen mit großen Zwischenräumen realisieren, die der besseren Luftdurchströmung und einer Gewichtseinsparung dienen.

Zum weiteren Schutz gegen Erwärmung des ersten Elements kann erfindungsgemäß vorgesehen sein, daß die mindestens eine Speiche derart ausgebildet und angeordnet ist, daß sie bei Drehung mit dem Bremsenkörper Luft zum Kühlen des Bremsenkörpers fördert. Mit anderen Worten wird die Speiche bzw. werden die Speichen nach Art einer Ventilatorschaufel ausgebildet und angeordnet.

Bevorzugt handelt es sich erfindungsgemäß um einen Bremsenkörper mit Innenbelüftung.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Fig. 1: eine Draufsicht auf eine Bremsscheibe mit einem Polrad nach einem bevorzugten Ausführungsbeispiel der Erfindung,
- Fig. 2: eine Schnittansicht entlang der Linie A-A nach Fig. 1 und 4 mit dem Verbindungsbereich zwischen Scheibe und Polrad,
- Fig. 3: eine Schnittansicht entlang der Linie B-B nach Fig. 1 und 4 mit dem unterbrochenen Bereich zwischen Scheibe und Polrad und
- Fig. 4: eine Schnittansicht entlang der Linie C-C nach Fig. 3 über den gesamten Umfang der Scheibe.

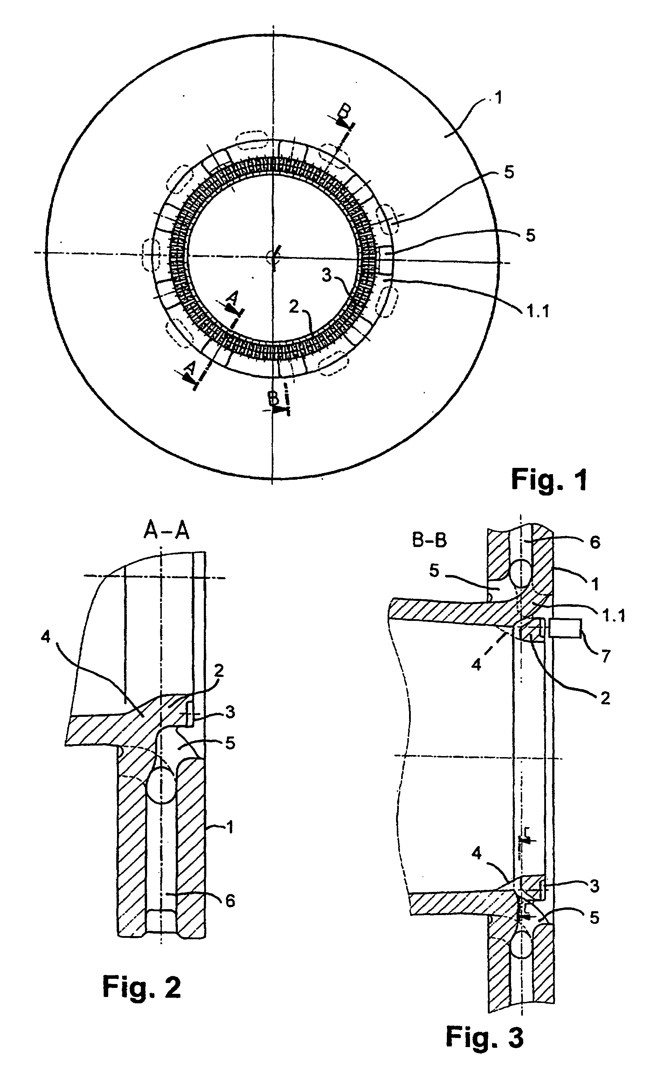

Fig. 1 zeigt eine Bremsscheibe mit einem Scheibenring 1, gegen dessen Reibflächen nicht dargestellte Bremsbacken angelegt werden. Radial innen liegend und außerhalb der Reibringflächen ist im Übergangsbereich zu einem Scheibentopf 1.1 ein Polrad 2 angeordnet, das in Axialrichtung eine unterbrochene Oberflächenstruktur zur Impulserzeugung in Form einer radialen Zahnscheibe 3 aufweist. Anstelle von Zähnen können selbstverständlich auch Durchbrüche, Ausnehmungen oder dgl. vorgesehen sein. Die nicht vollflächige, sondern unterbrochene Verbindung zwischen dem Scheibenring 1 und dem Polrad 2 wird durch (Guß)Speichen 4 realisiert, die im Anfangsbereich von Lüftungskanälen 5 liegen.

Es sei darauf hingewiesen, daß hier eine Bremsscheibe beschrieben ist, die einstückig aus einem Scheibenring und einem Scheibentopf besteht. Die nicht vollflächige Anbindung zwischen der Bremsscheibe und dem Polrad ist jedoch auch für den Fall erfindungsgemäß vorgesehen, daß der sogenannte Scheibenring als Einzelteil lösbar an einem Trägerteil (z.B. Scheibentopf) befestigt ist. In diesem Fall greifen die Speichen an dem Scheibenring an.

Fig. 2 als Schnittansicht entlang der Linie A-A zeigt einen Ausschnitt, in dem die Gußspeiche 4 zur Verbindung zwischen dem Scheibenring 1 und dem Polrad 2 dient. Erkennbar ist auch der Verlauf der der Kühlung dienenden Lüftungskanäle 5 zum Lufteintritt in einen radial nach außen verlaufenden Kühlkanal 6 zum Luftaustritt.

Fig. 3 als Schnittansicht entlang der Linie B-B zeigt die gleichen Funktionsbereiche wie Fig. 2, jedoch ist hier erkennbar, daß die Gußspeiche(n) 4 keine vollflächige Verbindung zwischen dem Scheibenring 1 und dem Polrad 2 darstellen. Ein Sensor 7 liegt dem Polrad 2 gegenüber. Auch hier sei angemerkt, daß die Lagen des Polrades 2 und des Sensors 7 zueinander entsprechend den Einbauverhältnissen in der Fahrzeugachse variabel gestaltet werden können. Dies gilt hier auch für die Lage (rechts/links) der Lüftungskanäle 5 bezüglich dem Scheibenring 1. Der Verlauf kann nämlich auch nur links oder nur rechts sein.

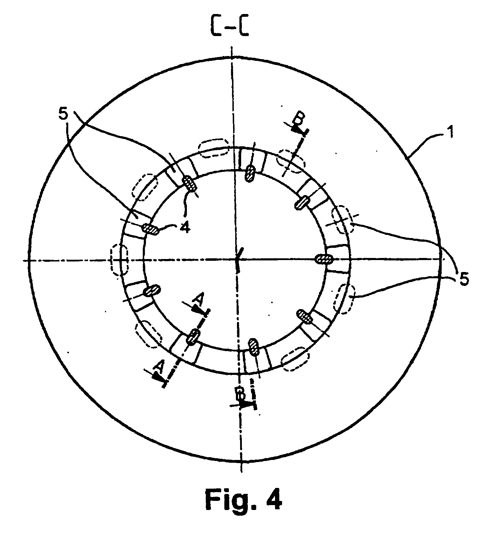

Fig. 4 als Schnittansicht entlang der Linie C-C in Fig. 3 zeigt zu den beschriebenen Funktionsteilen insbesondere die der Anbindung dienenden Gußspeichen 4 für das Polrad 2. Anzahl und Form der Gußspeichen 4 können beliebig ausgeführt sein, solange sie dazu dienen, eine nicht vollflächige Verbindung zwischen dem Scheibenring 1 und dem Polrad 2 zu realisieren. Insbesondere können sie als zusätzliche ventilatorschaufelartige Elemente wirken, um eine noch bessere Kühlung zu verwirklichen.

## Patentansprüche

1. Bremsenkörper für eine Bremse eines Rades, wobei
der Bremsenkörper (1, 1.1) sich in eingebautem Zustand mit dem Rade dreht und beim Bremsen Reibkräfte aufnimmt und
einstückig mit dem Bremsenkörper (1, 1.1) mindestens ein erstes Element (3) einer Erfassungsvorrichtung (3, 7) zum Erfassen der Drehzahl und/oder der Drehrichtung des Rades ausgebildet ist, das mit mindestens einem zweiten, nicht mit dem Rade drehenden Element (7) der Erfassungsvorrichtung (3, 7) zusammenwirkt,
**dadurch gekennzeichnet, daß**
das mindestens eine erste Element (3) über mindestens eine Speiche (4) mit dem Bremsenkörper (1, 1.1) verbunden ist, die nicht im Bremskraftfluß von dem Bremsenkörper (1, 1.1) zu dem Rade liegt.

2. Bremsenkörper nach Anspruch 1, **dadurch gekennzeichnet, daß** das mindestens eine erste Element (3) an einem bogenförmigen Träger (2) angeordnet ist, der über die mindestens eine Speiche (4) mit dem Bremsenkörper (1, 1.1) verbunden ist.

3. Bremsenkörper nach Anspruch 2, **dadurch gekennzeichnet, daß** der Träger (2) kreisringförmig ist.

4. Bremsenkörper nach einem der vorangehenden Ansprüche, **dadurch gekennzeichnet, daß** er eine Bremsscheibe ist.

5. Bremsenkörper nach Anspruch 4, **dadurch gekennzeichnet, daß** er einen Scheibenring (1) und einen Scheibentopf (1.1) aufweist.

6. Bremsenkörper nach Anspruch 5, **dadurch gekennzeichnet, daß** das ihm zugewendete Ende der mindestens eine Speiche (4) im Bereich des Übergangs vom Scheibentopf (1.1) zum Scheibenring (1) liegt.

7. Bremsenkörper nach Anspruch 5 oder 6, **dadurch gekennzeichnet, daß** bei nicht einstückiger Ausführung von Scheibentopf (1.1) und Scheibenring (1) das mindestens eine erste Element (3) einstückig mit dem Scheibenring (1.1) ausgebildet ist.

8. Bremsenkörper nach einem der vorangehenden Ansprüche, **dadurch gekennzeichnet, daß** drei Speichen (4) mit einem gegenseitigen Winkelabstand von 120° vorgesehen sind.

9. Bremsenkörper nach einem der vorangehenden Ansprüche, **dadurch gekennzeichnet, daß** die mindestens eine Speiche (4) derart ausgebildet und angeordnet ist, daß sie bei Drehung mit dem Bremsenkörper (1, 1.1) Luft zum Kühlen des Bremsenkörpers (1, 1.1) fördert.

10. Bremsenkörper nach einem der vorangehenden Ansprüche, **gekennzeichnet durch** eine Innenbelüftung (6).

## Claims

1. A brake body for a brake of a wheel, wherein
the brake body (1, 1.1) rotates with the wheel in the installed state and absorbs frictional forces during braking, and
at least one first element (3) of a detection device (3, 7) for detecting the rotational speed and/or the direction of rotation of the wheel is designed as one piece with the brake body (1, 1.1), which element cooperates with at least one second element (7) of the detection device (3, 7) which does not rotate with the wheel,
**characterised in that**
the at least one first element (3) is connected to the brake body (1, 1.1) via at least one spoke (4), which does not lie in the braking force flow from the brake body (1, 1.1) to the wheel.

2. A brake body according to Claim 1, **characterised in that** the at least one first element (3) is arranged on a curved support (2) which is connected to the brake body (1, 1.1) via the at least one spoke (4).

3. A brake body according to Claim 2, **characterised in that** the support (2) is annular.

4. A brake body according to one of the preceding claims, **characterised in that** it is a brake disc.

5. A brake body according to Claim 4, **characterised in that** it has a disc ring (1) and a disc cup (1.1).

6. A brake body according to Claim 5, **characterised in that** the end of the at least one spoke (4) directed towards the said brake body is located in the region of the transition from the disc cup (1.1) to the disc ring (1).

7. A brake body according to Claim 5 or 6, **characterised in that**, where the disc cup (1.1) and the disc ring (1) are not designed as one piece, the at least one first element (3) is designed so as to be as one piece with the disc ring (1.1).

8. A brake body according to one of the preceding claims, **characterised in that** three spokes (4) with a mutual angular spacing of 120° are provided.

9. A brake body according to one of the preceding claims, **characterised in that** the at least one spoke (4) is designed and arranged in such a way that, during rotation with the brake body (1, 1. 1), it conveys air to cool the brake body (1, 1.1).

10. A brake body according to one of the preceding claims, **characterised by** internal ventilation (6).

## Revendications

1. Corps de frein pour un frein d'une roue,
le corps de frein (1, 1.1) tournant, à l'état monté, avec la roue et absorbant des efforts de friction lors du freinage et
au moins un premier élément (3) d'un dispositif d'acquisition (3, 7) pour l'acquisition de la vitesse de rotation et/ou du sens de rotation de la roue étant formé d'un seul tenant avec le corps de frein (1, 1.1) et coopérant avec au moins un second élément (7) du dispositif d'acquisition (3, 7), qui ne tourne pas avec la roue,
**caractérisé en ce que**
le premier élément (3), au moins un, est relié au corps de frein (1, 1.1) par l'intermédiaire d'au moins un rayon (4) qui ne se trouve pas sur le passage du flux de l'effort de freinage du corps de frein (1, 1.1) vers la roue.

2. Corps de frein selon la revendication 1, **caractérisé en ce que** le premier élément (3), au moins un, est disposé sur un support (2) en forme d'arc relié au corps de frein (1, 1.1) par l'intermédiaire du rayon (4), au moins un.

3. Corps de frein selon la revendication 2, **caractérisé en ce que** le support (2) a une forme circulaire.

4. Corps de frein selon l'une des revendications précédentes, **caractérisé en ce qu'**il s'agit d'un disque de frein.

5. Corps de frein selon la revendication 4, **caractérisé en ce qu'**il présente un disque de freinage (1) et un moyeu de disque (1.1).

6. Corps de frein selon la revendication 5, **caractérisé en ce que** l'extrémité du rayon (4), au moins un, orientée dans sa direction, se trouve dans la zone du passage du moyeu de disque (1.1) sur le disque de freinage (1).

7. Corps de frein selon la revendication 5 ou 6, **caractérisé en ce que**, dans le cas d'une exécution du moyeu de disque (1.1) et du disque de freinage (1) qui ne serait pas d'une seul tenant, le premier élément (3), au moins un, est formé d'un seul tenant avec le moyeu de disque (1.1).

8. Corps de frein selon l'une des revendications précédentes, **caractérisé en ce que** trois rayons espacés les uns des autres d'un angle de 120° sont prévus.

9. Corps de frein selon l'une des revendications précédentes, **caractérisé en ce que** le rayon (4), au moins un, est formé et disposé de sorte qu'il transporte de l'air pour le refroidissement du corps de frein (1, 1.1) lors de la rotation du corps de frein (1, 1.1).

10. Corps de frein selon l'une des revendications précédentes, **caractérisé par** une ventilation interne (6).
